# EUROPEAN PATENT SPECIFICATION

(11) **EP 1 860 931 B1**
(45) Date of publication and mention of the grant of the patent: **11.01.2012**
(21) Application number: 06716644.7
(22) Date of filing: 08.03.2006
(51) Int. Cl.: A01G 31/00, A01G 7/00

(54) **MULTIFOLD OXYGEN MEASUREMENT DEVICE**
MEHRSTUFIGE SAUERSTOFFMESSVORRICHTUNG
DISPOSITIF DE MESURE MULTIPLE DU CONTENU EN OXYGÈNE

(30) Priority: 09.03.2005 EP 05075573
(43) Date of publication of application: 05.12.2007
(73) Proprietor: Nederlandse Organisatie voor Toegepast -Natuurwetenschappelijk Onderzoek TNO, 2628 VK Delft (NL)
(72) Inventor: VAN DUIJN, Albert, NL-2341 BV Oegstgeest (NL); HOLTMAN, Wessel Luitje, NL-2051 HK Overveen (NL); DRAAIJER, Arie, NL-3704 BM Zeist (NL)
(74) Representative: Hatzmann, Martin
(86) International application number: PCT/NL2006/000120
(87) International publication number: WO 2006/096054

(56) References cited:
- WO-A-01/63264
- US-A- 5 096 294
- US-A1- 2003 230 638
- US-A1- 2004 231 240
- OGURTSOV V I ET AL: "Modeling of luminescence-based oxygen sensors with non-uniform distribution of excitation and quenching characteristics inside active medium" SENSORS AND ACTUATORS B, ELSEVIER SEQUOIA S.A., LAUSANNE, CH, vol. 88, no. 1, 1 January 2003 (2003-01-01), pages 89-100, XP004395016 ISSN: 0925-4005

## Description

The invention relates to a plant cultivating environment comprising:
an oxygen sensing arrangement for sensing an oxygen level in said environment.

For plant cultivating environments, WO03005807 discusses various aspects related to monitoring and improving growth conditions. One of these aspects is measuring an oxygen level in a plant substrate in order to adequately adjust the oxygen level to improve the growth conditions in the substrate. A sensor that is proposed to implement such oxygen monitoring is the sensor described in WO01/63264, utilizing a fluorescence quenching effect by oxygen. This sensor can be used as a fluorescent coating to be brought in contact with the oxygen environment and by a photoelectric readout of the fluorescence an oxygen level can be inferred.

One of the aspects that is discussed is the fact that water level is an important factor for further assessing the oxygenation of the substrate. Another aspect that is touched upon is the aspect that oxygen levels may vary from place to place. It has been found that the existing oxygen sensor is only capable of measuring a single spot oxygen level, so that adequate measuring of oxygen levels is cumbersome due to the need of repeated measurements or unreliable, due to the limited number of spots that are selectable and expensive due to the equipment needed to provide a plurality of simultaneous measurements.

To overcome the above drawbacks, the invention provides a plant cultivating environment according to the features of claim 1. In particular, a plant cultivating environment is provided comprising: an oxygen sensing arrangement for sensing an oxygen level in said environment; said oxygen sensing arrangement comprising a base plate for underlying a substrate; and a plurality of oxygen sensors each positioned on said base plate at a predetermined position for sensing a local oxygen level in said substrate.

In a preferred embodiment the oxygen sensors are dimensioned differing in height relative to the base plate. It has been found that the oxygen levels may vary dramatically relative to the height of the base plate and that an irrigation strategy may be heavily dependent on the particular oxygen levels sensed at differing heights.

In another aspect, the invention provides a method of cultivating plants in a plant cultivating environment comprising: providing an oxygen sensing arrangement for sensing an oxygen level in a substrate for cultivating plants; measuring an oxygen level at plurality of predetermined positions in said substrate for sensing a local oxygen level in said substrate; and adjusting a water irrigation in said substrate in response to a measured oxygen level at said plurality of predetermined positions. Here preferably, depending on a sensed oxygen level at a predetermined height in the substrate the method may comprise draining water from the substrate and/or supplying water to the substrate to regulate oxygen levels in the substrate.

Specifically the method may comprise draining water from the substrate when an oxygen level is low in a higher part of the substrate. Alternatively, or in addition the method comprises supplying water from the substrate when an oxygen level is low in a lower part of the substrate.

Further aspects and benefits of the invention will be described with reference to the drawings. Here:
Figure 1 shows a schematic drawing of a plant cultivating environment according to the invention;
Figure 2 shows a graph illustrating a difference in draining (A) and supplying of water (B); and
Figure 3 shows a graph illustrating an effect of locally supplying water in two (A) or three (B) positions; and
Figure 4 shows a correlation diagram of a measured averaged Oxygen content with various other growth factors relevant for plant cultivation.

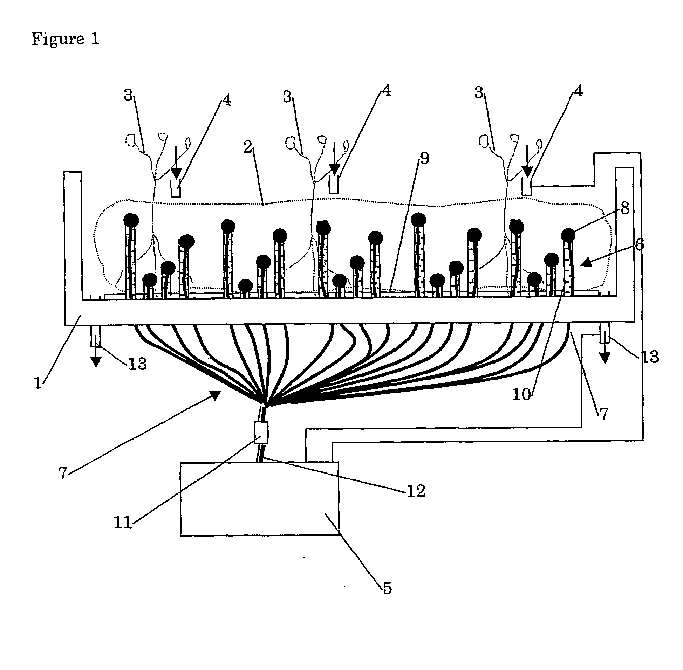

In Figure 1 a container 1, for use in a greenhouse or other plant growing environment is shown that is adapted according to the invention to provide a simultaneous or almost simultaneous (for instance: sequential) measurement of oxygen levels in a substrate 2. The substrate 2 is typically a conventional substrate such as mineral growth substrate: glass wool or rock wool. Plants 3 are cultivated on the substrate 2 by supplying water and other growth factors. Water is typically provided via water supplies 4. To adequately monitor growth conditions, an oxygen measurement device 5 is present which is coupled to oxygen sensors 6. The oxygen measurement device 5 is arranged as a processor processing multiple input signals, which may be of an electrical or optical nature. In the preferred embodiment, the sensors 6 are arranged, as schematically depicted, as optical fibres 7 (glass fibres), which are at a distal end coated with an oxygen sensitive coating 8, in particular, a fluorescent dye that is sensitive to oxygen levels. Typically, such a dye can be a matrix material in which an organometallic complex is embedded.

The organometallic complex is an oxygen-sensitive fluorescent dye, with the amount of fluorescence and the fluorescence life time being dependent on the oxygen content in the medium. Such an organometal typically consists of Tris Ru2+-4,7-biphenyl-1,10-phenanthroline; this Ru(ruthenium) complex is particularly oxygen-sensitive, but other organometals can also be used, such as an Os complex or a Pt complex. Because of the gas permeability of the substrate 2, oxygen can interact with the organometallic complex. As a result, the amount of fluorescence is influenced by the amount of oxygen in the medium. By measuring the emitted intensity or life time of the fluorescence, the extent of the influence, and hence the oxygen content, can be established.

A typical way to measure an oxygen level is to generate light, preferably by a lamp (not depicted) in the oxygen measurement device 5, of a specific wavelength to which the fluorescent dye is sensitive. Through optic fibre 7 this light propagates to the fluorescent coating 8, which, under the influence of oxygen, shows a specific fluorescent behaviour as explained above. This fluorescence can be conveniently measured by guiding the fluorescent light via the same fibre 7 back to the oxygen measurement device 5 where it can be photo electrically converted to provide an electric sensing signal. This signal can be fed into an AD converter and further processed by processor to calculate an oxygen level. Further, this information may be combined by the processor with position information which may be inherently available in a memory element. To this end, the fibre may be identified based on a predetermined position order or other identification characteristic and this identification can be coupled to available position information. Alternatively, the sensor 6 may be provided with positioning means and a signal circuit which provides positioning information to the oxygen measurement device 5.

To secure the sensors in the substrate 2, according to the invention, the sensors are positioned on a base plate 9 at a predetermined position for sensing a local oxygen level in the substrate 2. This can be done, preferably, by mounting guide elements 10, such metal pipes or the like, on a base plate 9 and feeding the optical fibre therethrough until a predetermined height. Alternatively, the base plate 9 may be produced in plastic, for instance, by plastic moulding, and plate 9 and guides 10 may be formed monolithically.

Furthermore, to provide a conveniently manageable embodiment, the fibres may be provided with a connector element 11 which couples the fibres individually or in common to an optical input/output 12 of the oxygen measurement device 5. In the device 5, the fibres may be coupled to an photoelectric array element such as a linear or matrix element. The output thereof can be spatially separated to belong to different fibres, each identifiable to a predetermined spatial position in the substrate 2. Alternative mechanical or optical switching may be provided to select one or more fibres for processing. Further, alternatively, a simultaneous or sequential processing may be provided by multiplexing or parallel processing of optical signals derived from a plurality of fibres.

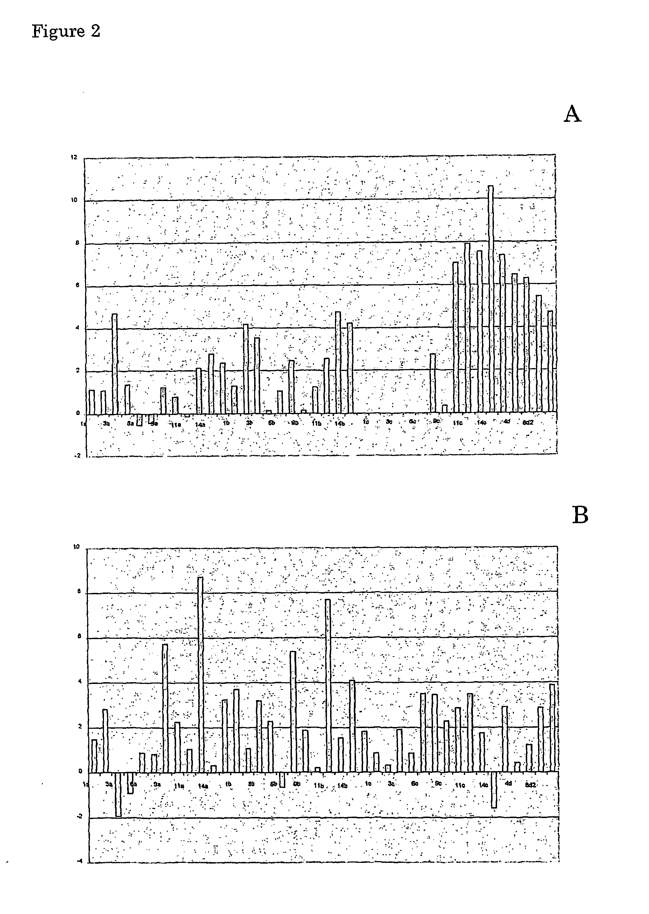

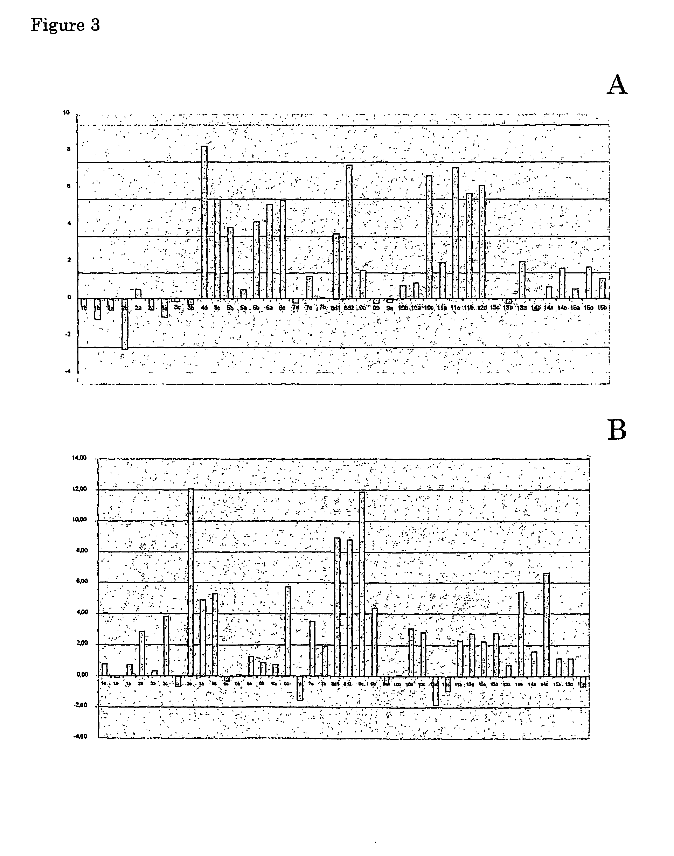

As depicted in a preferred embodiment in Figure 1, apart from monitoring, direct control can be provided, as shown by way of example in the embodiment depicted in Figure 1, to drains 13 and/or supplies 4 in order to adjust a water irrigation regime to the substrate. In Figure 2 and Figure 3 can be shown how measurement of local oxygen levels may be used to adjust the irrigation regime.

In particular, Figure 2 illustrates a measurement that was performed in a conventional rock wool substrate of about 1x2 m. In the substrate, on forty spatially differing positions an oxygen level was measured, on 15 linear positions along the length of the substrate. In the graph height positions are indicated as a, b, c, or d positions, wherein a is a lower position and d is a higher position just below the surface of the substrate. In the measurement arrangement, the sensors were formed by metal pins of differing heights, that were coated with a fluorescent coating as discussed above sensitive to an oxygen level. The fluorescence of the coating was measured by locally irradiating the coating and measuring the fluorescence decay of the coating. In the Figure 2A situation, the substrate was immersed for 95% with oxygen low (oxygen depleted) water as an initial starting situation. Then, in the Figure 2A situation, the substrate was drained, from 95% to 80 immersion.

Figure 2A shows on the X-axis the position sensors sorted to height (lowest a- and b-sensors on the left, higher c- and d-sensors on the right). On the Y-axis an increase of oxygen level is illustrated in percentages. As is clearly shown, in the higher regions (bcd positions, in the graph sorted to the right) a considerable (around 4%) positive increase of oxygen content is measured. The lower regions marginally profit from draining the substrate.

Next, oxygen rich water was supplied to the substrate. Figure 2B clearly shows that this uniformly affects the oxygen level distribution, especially, also on the lower heights (a-, b-sensors) oxygen level increases. It can be shown, that, depending on oxygen distribution, supplying or draining the substrate may affect the oxygen levels in the substrate and the oxygenation of higher or lower parts of the substrate in a vertical direction can be controlled.

Figure 3 shows the locality of water supply and how this can influence the oxygen distribution in the horizontal plane. In Figure 3A water is supplied on two positions (the 5 and 10 positions, located at about 1/3 and 2/3 of the substrate length). An oxygen increase is clearly shown in the vertical direction around the 5 position (positions 4d, 5a-c and 6a-c show a significant increase in oxygenation) and the 10 position.

In Figure 3 B the same routine was exercised for three different supply positions, in particular, the 2, 8 and 14 position. Again, clearly, the 2-4, the 7-9 and the 13-14 positions show a positive increase in oxygen level.

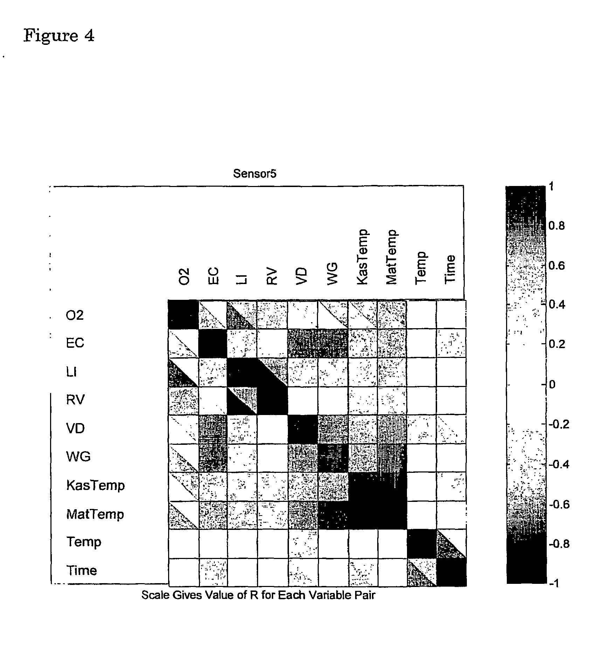

In Figure 4 a correlation diagram is shown indicating a strong correlation between an averaged oxygen (02) content at a predetermined height in a cultivation substrate (measured at a plurality of positions at 1 cm from the bottom of the substrate). It clearly shows a strong correlation with among others light (LI, strong negative correlation), temperature of the substrate (MatTemp), time of the day (Time), and water content (WG). The striped areas indicate a negative correlation. The temperature of the substrate and the water content of the substrate, as well as the light intensity in the green house, appears to be negatively correlated to the oxygen content: the less light and the colder and less water in the substrate, the higher is the oxygen content.

Although the invention has been illustrated with the specific embodiment of Figure 1, variations and modification to that embodiment fall well within the scope of the claims. Such variations may be tables, soil, or concrete floors. Furthermore, besides mineral growth substrate, also other substrates such as peat, coir etc fall within the scope of the claim. The substrates may be present as slabs, pots, or blocks. Variations may also comprise: electrical transmission of oxygen sensing signals; local readout of the sensors through a probe that is brought in contact with the sensors, for instance, a probe that contacts an oxygen sensitive coating applied on cylindrical pins erected on a base plate. Such variations or modification are deemed to be part of the invention as claimed in the annexed claims.

## Claims

1. A plant cultivating environment comprising:
- an oxygen sensing arrangement for sensing an oxygen level in said environment; said oxygen sensing arrangement comprising:
- a base plate for underlying a substrate; and
- a plurality of oxygen sensors each positioned on said base plate at a predetermined position for sensing a local oxygen level in said substrate.

2. A plant cultivating environment according to claim 1, wherein the oxygen sensors are dimensioned differing in height relative to the base plate.

3. A plant cultivating environment according to claim 1 or 2, wherein the sensors are provided at a distal end of optical fibres that are oriented perpendicularly at predetermined positions relative to the base plate, the fibres connectable to a read out device.

4. A plant cultivating environment according to claim 3, wherein the fibres are inserted in cylindrical guides that are fixed relative to the base plate.

5. A plant cultivating environment according to any of the preceding claims, further comprising a read out device connectable to the oxygen sensor for reading out an optical output of said oxygen sensor and a switching device for switching a predetermined one of said plurality of oxygen sensors to said read out device.

6. A plant cultivating environment according to any of the preceding claims, wherein the oxygen sensor comprises an oxygen sensitive fluorescent dye that under the influence of incident light, provides fluorescence, which can be read out in a read out device, wherein a fluorescence lifetime is associated with a sensed oxygen level.

7. A method of cultivating plants in a plant cultivating environment comprising:
- providing an oxygen sensing arrangement for sensing an oxygen level in a substrate for cultivating plants;
- measuring an oxygen level at plurality of predetermined positions in said substrate for sensing a local oxygen level in said substrate; and
- adjusting a water irrigation in said substrate in response to a measured oxygen level at said plurality of predetermined positions.

8. A plant cultivating method according to claim 7, wherein the oxygen sensors are dimensioned differing in height relative to a base plate.

9. A method according to any of the claims 7 and 8, comprising draining water from the substrate and/or supplying water to the substrate to regulate oxygen levels in the substrate.

## Patentansprüche

1. Pflanzenanbauumgebung mit:
- einer Sauerstoffsensoranordnung zum Detektieren eines Sauerstoffgehalts in der Umgebung, wobei die Sauerstoffsensoranordnung aufweist:
- eine Basisplatte, um unter einem Substrat zu liegen, und
- eine Mehrzahl von Sauerstoffsensoren, von denen jeder auf der Basisplatte an einer vorgegebenen Position angeordnet ist, um einen lokalen Sauerstoffgehalt in dem Substrat zu messen.

2. Pflanzenanbauumgebung nach Anspruch 1, wobei die Sauerstoffsensoren in unterschiedlichen Höhen relativ zu der Basisplatte dimensioniert sind.

3. Pflanzenanbauumgebung nach Anspruch 1 oder 2, wobei die Sensoren an einem distalen Ende von optischen Fasern vorgesehen sind, die an vorgegebenen Positionen senkrecht relativ zu der Basisplatte orientiert sind, wobei die Fasern mit einem Auslesegerät verbindbar sind.

4. Pflanzenanbauumgebung nach Anspruch 3, wobei die Fasern in zylindrische Führungen eingesetzt sind, die relativ zu der Basisplatte fixiert sind.

5. Pflanzenanbauumgebung nach einem der vorhergehenden Ansprüche, die weiter ein Auslesegerät, das mit dem Sauerstoffsensor verbindbar ist, um eine optische Ausgabe des Sauerstoffsensors auszulesen, und eine Schalteinrichtung aufweist, um einen vorgegebenen aus der Vielzahl von Sauerstoffsensoren auf das Auslesegerät zu schalten.

6. Pflanzenanbauumgebung nach einem der vorhergehenden Ansprüche, wobei der Sauerstoffsensor einen auf Sauerstoff empfindlichen Fluoreszenzfarbstoff aufweist, der unter dem Einfluss von einfallendem Licht Fluoreszenz zeigt, die in dem Auslesegerät ausgelesen werden kann, wobei eine Fluoreszenzlebensdauer einem gemessenen Sauerstoffgehalt zugeordnet ist.

7. Verfahren zum Anbau von Pflanzen in einer Pflanzenanbauumgebung, bei dem:
- eine Sauerstoffsensoranordnung zum Messen eines Sauerstoffgehalts in einem Substrat zum Pflanzenanbau bereitgestellt wird,
- ein Sauerstoffgehalt an einer Mehrzahl von vorgegebenen Positionen in dem Substrat gemessen wird, um einen lokalen Sauerstoffgehalt in dem Substrat zu messen, und
- in dem Substrat eine Bewässerung mit Wasser in Reaktion auf einen gemessenen Sauerstoffgehalt an der Mehrzahl von vorgegebenen Positionen eingestellt wird.

8. Pflanzenanbauverfahren nach Anspruch 7, wobei die Sauerstoffsensoren mit unterschiedlichen Höhen relativ zu einer Basisplatte dimensioniert sind.

9. Verfahren nach einem der Ansprüche 7 und 8, wobei Wasser aus dem Substrat abgeleitet und/oder dem Substrat Wasser zugeleitet wird, um die Sauerstoffgehalte in dem Substrat zu regeln.

## Revendications

1. Environnement de culture de végétaux, comprenant :
- un système de détection d'oxygène pour détecter un taux d'oxygène dans ledit environnement ; ledit système de détection d'oxygène comprenant :
- un socle pour supporter un substrat ; et
- une pluralité de capteurs d'oxygène positionnés chacun sur ledit socle à un emplacement prédéterminé afin de détecter un taux d'oxygène local dans ledit substrat.

2. Environnement de culture de végétaux selon la revendication 1, dans lequel les capteurs d'oxygène sont dimensionnés avec des hauteurs différentes par rapport au socle.

3. Environnement de culture de végétaux selon la revendication 1 ou la revendication 2, dans lequel les capteurs sont prévus à une extrémité distale de fibres optiques qui sont orientées perpendiculairement à des emplacements prédéterminés par rapport au socle, lesdites fibres pouvant être connectées à un dispositif d'affichage.

4. Environnement de culture de végétaux selon la revendication 3, dans lequel les fibres sont introduites dans des guides cylindriques qui sont fixes par rapport au socle.

5. Environnement de culture de végétaux selon l'une quelconque des revendications précédentes, comprenant en plus un dispositif d'affichage qui peut être connecté au capteur d'oxygène afin d'afficher une sortie optique dudit capteur d'oxygène, ainsi qu'un dispositif de commutation pour commuter un capteur prédéterminé de ladite pluralité de capteurs d'oxygène vers ledit dispositif d'affichage.

6. Environnement de culture de végétaux selon l'une quelconque des revendications précédentes, dans lequel le capteur d'oxygène comprend un colorant fluorescent sensible à l'oxygène qui, sous l'effet de la lumière incidente, émet une fluorescence qui peut être lue sur un dispositif d'affichage, la durée de vie de la fluorescence étant associée au taux d'oxygène détecté.

7. Procédé de culture de végétaux dans un environnement de culture de végétaux, comprenant :
- la mise en place d'un système de détection d'oxygène afin de détecter un taux d'oxygène dans un substrat de culture de végétaux ;
- la mesure du taux d'oxygène à une pluralité d'emplacements prédéterminés dans ledit substrat afin de détecter un taux d'oxygène local dans ledit substrat ; et
- l'ajustement d'une irrigation à l'eau dudit substrat en réponse au taux d'oxygène mesuré à ladite pluralité d'emplacements prédéterminés.

8. Procédé de culture de végétaux selon la revendication 7, dans lequel les capteurs d'oxygène sont dimensionnés avec des hauteurs différentes par rapport au socle.

9. Procédé selon l'une quelconque des revendications 7 et 8, comprenant le drainage d'eau hors du substrat et/ou l'apport d'eau au substrat afin de réguler les taux d'oxygène dans le substrat.
